# EUROPÄISCHE PATENTSCHRIFT

(11) **EP 0 554 485 B1**
(45) Veröffentlichungstag und Bekanntmachung des Hinweises auf die Patenterteilung: **19.11.1997**
(21) Anmeldenummer: 92101883.4
(22) Anmeldetag: 05.02.1992
(51) Int. Cl.: G06F 1/14, G06F 9/46

(54) **Aktualisierungsverfahren für Timerzellen eines Automatisierungsgeräts und Automatisierungsgerät**
Method for updating timer cells of an automation apparatus and automation apparatus
Méthode de mise à jour des cellules de rythmeur d'un appareil d'automatisation et appareil d'automatisation

(43) Veröffentlichungstag der Anmeldung: 11.08.1993
(73) Patentinhaber: SIEMENS AKTIENGESELLSCHAFT, 80333 München (DE)
(72) Erfinder: Steffen, Lothar, Dipl.-Ing., (FH), W-8552 Höchstadt (DE); Reinert, Gerhard, Dipl.-Ing., (FH), W-8460 Schwandorf (DE)

(56) Entgegenhaltungen:
- EP-A- 0 078 916
- EP-A- 0 267 612
- WESCON TECHNICAL PAPERS. 30 October 1984, NORTH HOLLYWOOD US pages 1 - 16 BOB BEIMS 'Multiprocessing capabilities of the MC68020 32-bit microprocessor'
- PATENT ABSTRACTS OF JAPAN vol. 7, no. 245 (P-233)29 October 1983 ( HITACHI SEISAKUSHO KK ) 2 August 1983 & JP-A-58 129 672

## Beschreibung

Die vorliegende Erfindung betrifft ein Aktualisierungsverfahren für Timerzellen eines Automatisierungsgerätes, das ein Anwenderprogramm ausführt, wobei sowohl das Anwenderprogramm als auch das Aktualisierungsverfahren auf die Timerzellen zugreifen können, sowie ein Automatisierungsgerät zur Durchführung des Aktualisierungsverfahrens.

Aktualisierungsverfahren sind allgemein bekannt. In der Literatur ("Lexikon der Informatik und Datenverarbeitung", R. Oldenbourg Verlag, München 1991) kennt man z.B. den gegenseitigen Ausschluß (mutual exclusion) beim Zugriff auf gemeinsam genutzte Speicherbereiche (shared memory).

In der Regel wird das Aktualisierungsverfahren von einem schnellen Bitprozessor ausgeführt, der auch das Anwenderprogramm abarbeitet. Hierzu wird in periodischen Zeitabständen, typisch 10 ms, die Programmabarbeitung des Bitprozessors mittels eines Interrupts für wenige µs unterbrochen und in dieser Zeit die Timerzellen aktualisiert. Dabei ist nicht vorhersehbar, an welcher Stelle des Anwenderprogramms der Bitprozessor unterbrochen wird. Automatisierungsgeräte werden aber in der Regel zur Steuerung von Echtzeitprozessen eingesetzt. Wenn nun der Bitprozessor an einer zeitkritischen Stelle des Anwenderprogramms unterbrochen wird, kann es geschehen, daß das Echtzeitverhalten der Steuerung bzw. die Reproduzierbarkeit des Steuerungsverhaltens beeinträchtigt werden.

Aus Beims ("Multiprocessing capabilities of the M68020 32-bit microprocessor", WESCON Techn. Papers, 30.10.1984, pp. 1-16) ist bekannt, verschiedene Programme auf verschiedenen Prozessoren parallel ablaufen zu lassen. Die Kopplung dieser Programme kann über einen gemeinsamen Speicher erfolgen. Zur Verhinderung von Konflikten beim gleichzeitigen Zugriff mehrerer Prozessoren auf einen Bereich im gemeinsamen Speicher werden, wie im Stand der Technik üblich, Semaphore eingesetzt.

Aufgabe der vorliegenden Erfindung ist es, ein Aktualisierungsverfahren anzugeben, bei dem negative Auswirkungen auf das Echtzeitverhalten und die Reproduzierbarkeit des Steuerungsverhaltens mit Sicherheit vermieden werden.

Die Aufgabe wird durch die Merkmale des Patentanspruchs 1 gelöst.

Das Aktualisierungsverfahren und das Anwenderprogramm werden jeweils in eigenen Prozessoren ausgeführt, wobei jeder Prozessor nur während der Speicherzugriffspausen des jeweils anderen Prozessors Speicherzugriffe ausführt.

Die Parallelität von Aktualisierungsverfahren und Anwenderprogramm kann beispielsweise dadurch erzielt werden, daß das Aktualisierungsverfahren und das Anwenderprogramm abwechselnd Speicherzugriffe ausführen.

Fehlerhafte Werte von Timerzellen, die dadurch auftreten können, daß beide Prozessoren praktisch gleichzeitig auf die gleiche Timerzelle zurückgreifen, werden mit Sicherheit vermieden,
- wenn beim Aktualisieren einer der Timerzellen vom Aktualisierungsprozessor aus der Timerzelle der Wert ausgelesen, der Wert geändert und der geänderte Wert wieder in die Timerzelle zurückgeschrieben wird,
- wenn überwacht wird, ob der Anwendungsprozessor in einer Bearbeitungszeit zwischen Lesen und Schreiben des Wertes der Timerzelle durch den Aktualisierungsprozessor auf die Timerzelle zugreift, und
- wenn das Schreiben des geänderten Wertes unterdrückt und der Lesevorgang wiederholt wird, vorzugsweise der Lesevorgang anstelle des Schreibvorgangs ausgeführt wird, wenn der Anwendungsprozessor in der Bearbeitungszeit auf die Timerzelle zugreift.

Wenn das Automatisierungsgerät einen Zusatzprozessor aufweist, der asynchron zum Anwendungs- und Aktualisierungsprozessor Speicherzugriffe ausführt, wird die korrekte Ausführung des Aktualisierungsverfahrens dadurch gewährleistet,
- daß vor dem Zugriff des Zusatzprozessors eine Nichtanlaufanforderung an den Aktualisierungsprozessor übermittelt wird
- und daß der Zugriff des Zusatzprozessors erst nach dem Aktualisieren aller Timerzellen erfolgt.

Weitere Vorteile und Einzelheiten ergeben sich aus der nachfolgenden Beschreibung eines Ausführungsbeispiels, anhand der Zeichnungen und in Verbindung mit den weiteren Unteransprüchen. Dabei zeigen:
- FIG 1: ein Blockschaltbild der erfindungswesentlichen Teile eines Automatisierungsgeräts,
- FIG 2: das Zugriffsverhalten der Prozessoren und
- FIG 3: das Unterdrücken eines Schreibzugriffs.

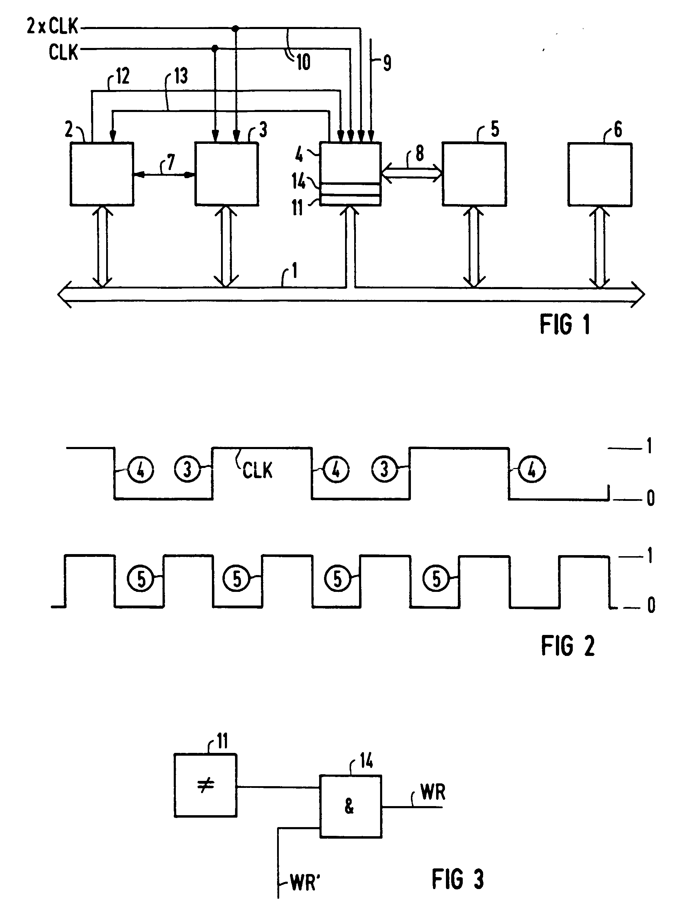

FIG 1 zeigt einen Ausschnitt eines Blockschaltbilds einer Zentraleinheit eines Automatisierungsgeräts. Gemäß FIG 1 sind an einen Bus 1 folgende Bauteile angeschlossen: Ein Zusatzprozessor 2, ein Anwendungsprozessor 3, ein Aktualisierungsprozessor 4, ein Timerzellenspeicher 5 sowie mindestens ein weiterer Speicher 6.

Der Zusatzprozessor 2 ist typisch ein Wortprozessor, d.h. z.B. ein Standard-Mikroprozessor, z.B. ein Motorola 68000. Der Anwendungsprozessor 3 ist im Regelfall ein schneller Bitprozessor, meist in Form eines ASICs. Der Aktualisierungsprozessor 4 ist vorteilhafterweise ein ASIC, in dem das vom Aktualisierungsprozessor 4 auszuführende Programm fest verdrahtet ist. Diese feste Verdrahtung ist im vorliegenden Fall möglich, weil das vom Aktualisierungsprozessor 4 auszuführende Programm extrem kurz, extrem einfach und unveränderlich ist.

Der Anwendungsprozessor 3 führt das Anwenderprogramm aus, das im Speicher 6 abgespeichert ist. Der Speicher 6 kann beispielsweise ein RAM oder ein auf einem Steckmodul angeordneter Festwertspeicher, also ein EPROM, ein EEPROM oder ein Flash-EPROM sein. Beim Erkennen von Wort- oder Systembefehlen stößt der Anwendungsprozessor 3 über die Steuerleitung 7 den Zusatzprozessor 2 an und geht selbst in einen Wartezustand. Nach dem Abarbeiten des Wort- bzw. Systembefehls stößt der Zusatzprozessor 2 wieder den Anwendungsprozessor 3 an und geht seinerseits in den Wartezustand.

Der Timerzellenspeicher 5 ist ein relativ kleiner Speicher mit z.B. 256 Speicherzellen, in denen aufgelaufene Zeiten abgespeichert sind. Der Anwendungsprozessor 3 und auch der Zusatzprozessor 2 können auf die Timerzellen des Timerzellenspeichers 5 sowohl lesend als auch schreibend zugreifen. Das Aktualisieren der Timerzellen dagegen, d.h. das Anpassen der in den Timerzellen gespeicherten Werte an die inzwischen verstrichene Zeit, wird vom Aktualisierungsprozessor 4 bewerkstelligt.

Hierzu greift der Aktualisierungsprozessor 4 ebenfalls lesend und schreibend auf den Timerzellenspeicher 5 zu, vorzugsweise über den Aktualisierungsbus 8. An dieser Stelle ist zu erwähnen, daß der Aktualisierungsprozessor 4 im Regelfall inaktiv ist. Er wird lediglich von Zeit zu Zeit, z.B. jede ms oder alle 10 ms, über die Steuerleitung 9 angestoßen und aktualisiert daraufhin binnen weniger µs alle Zeitzellen. Sodann deaktiviert sich der Aktualisierungsprozessor 4 wieder.

Das Aktualisieren der Timerzellen erfolgt parallel zur Abarbeitung des Anwenderprogramms und damit nicht nur verdeckt vom Benutzer und vom Anwenderprogramm, sondern auch verdeckt vom Anwendungsprozessor 3. Anders ausgedrückt, nicht nur der Programmierer des Anwenderprogramms, sondern auch der Programmierer für das Betriebssystem des Anwendungsprozessors 3 braucht sich nicht um die Aktualisierung der Zeitzellen zu kümmern; diese Aktualisierung übernimmt der Aktualisierungsprozessor 4.

Realisiert wird oben erwähnte verdeckte Aktualisierung dadurch, daß der Aktualisierungsprozessor 4 und der Anwendungsprozessor 3 Speicherzugriffe nur abwechselnd ausführen. Dieser alternierende Zugriff kann z.B. dadurch erreicht werden, daß, wie über die Taktleitung 10 angedeutet, Anwendungsprozessor 3 und Aktualisierungsprozessor 4 synchron mit dem Takt CLK getaktet werden, wobei der Anwendungsprozessor 3 nur bei einer ansteigenden Taktflanke einen Speicherzugriff ausführt und der Anwendungsprozessor 4 nur bei einer fallenden Taktflanke. Selbstverständlich muß in diesem Fall gewährleistet sein, daß der Speicherzugriff vor dem nächsten Flankenwechsel mit Sicherheit abgeschlossen ist. Diese Sicherheit ist gegeben, wenn der Timerzellenspeicher 5 ein schneller Speicher ist. Der Grund dafür, daß der Timerzellenspeicher 5 ein schneller Speicher sein muß, ist, daß auf den Timerzellenspeicher 5 im Ergebnis mit der doppelten Taktfrequenz 2 x CLK zugegriffen wird.

FIG 2 veranschaulicht die oben beschriebenen Verhältnisse. Der Takt CLK wird abwechselnd logisch 0 und logisch 1. Bei einem Wechsel von logisch 0 zu logisch 1 führt jeweils der Anwendungsprozessor 3 einen Speicherzugriff aus, wie durch die eingekreiste "3" angedeutet ist. Umgekehrt führt bei einem Pegelwechsel von logisch 1 zu logisch 0 der Aktualisierungsprozessor 4 einen Speicherzugriff auf den Speicher 5 aus, wie durch die eingekreiste "4" angedeutet ist. Die Zugriffe des Aktualisierungsprozessors 4 erfolgen selbstverständlich nur dann, wenn der Aktualisierungsprozessor 4 gerade aktiv ist.

Ebenfalls in FIG 2 dargestellt ist die doppelte Taktfrequenz, die mit 2 x CLK bezeichnet ist. Mit dieser doppelten Taktfrequenz wird beispielsweise die Übernahme der Daten aus dem Timerzellenspeicher 5 gesteuert, und zwar dadurch, daß die Daten bei steigenden Signalflanken des Taktes 2 x CLK übernommen werden. Dieses Übernehmen der Daten aus dem Timerzellenspeicher 5 bzw. in den Timerzellenspeicher 5 kann z.B. durch Rücksetzen des "Read"- bzw. "Write"-Befehls bei jeder steigenden Flanke des Taktes 2 x CLK geschehen, wie dies in FIG 2 durch die eingekreiste "5" angedeutet ist. Dadurch wird mit Sicherheit gewährleistet, daß sich die Zugriffe des Anwendungsprozessors 3 und des Aktualisierungsprozessors 4 auf den Speicher 5 physikalisch nicht gegenseitig behindern. Die gegenseitige Behinderung ist also dadurch ausgeschlossen, daß der Aktualisierungsprozessor 4 nur während der Speicherzugriffspausen des Anwendungsprozessors 3 Speicherzugriffe ausführt und umgekehrt der Anwendungsprozessor 3 nur während der Speicherzugriffspausen des Aktualisierungsprozessors 4 Speicherzugriffe ausführt.

Im Regelfall läuft das Aktualisierungsverfahren derart ab, daß der Aktualisierungsprozessor 4 lesend auf eine der Timerzellen zugreift, während der Anwendungsprozessor 3 keinen Speicherzugriff ausführt. Während des nächsten Speicherzugriffs des Anwendungsprozessors 3 inkrementiert der Aktualisierungsprozessor 4 den gelesenen Wert. Während der nächsten Zugriffspause des Anwendungsprozessors 3 schreibt der Aktualisierungsprozessor 4 den geänderten Wert wieder in die Timerzelle zurück. Während des nächsten Zugriffs des Anwendungsprozessors 3 inkrementiert der Aktualisierungsprozessor die Adresse, auf die er zugreift, um eins und beginnt wieder von vorne.

Konflikte können bei dieser Vorgehensweise nur dann auftreten, wenn der Anwendungsprozessor 3 während des einen Zugriffs, den er zwischen dem Lesen und dem Schreiben einer Timerzelle durch den Aktualisierungsprozessor 4 ausführt, auf genau dieselbe Timerzelle schreibend zugreift. Dieser Konflikt wird dahingehend gelöst, daß bei einem derartigen Zugriff das Schreiben des geänderten Wertes durch den Aktualisierungsprozessor unterdrückt und statt dessen das Lesen des Wertes wiederholt wird, so daß die Timerzelle erst nach dem Zugriff des Anwendungsprozessors 3 aktualisiert wird.

Zur Überwachung derartiger Zugriffe des Anwendungsprozessors 3 weist der Aktualisierungsprozessor 4 einen Adreßvergleicher 11 auf, in dem die letzte Adresse, auf die der Anwendungsprozessor 3 zugegriffen hat, abgespeichert ist.

Wenn diese Adresse mit der Adresse übereinstimmt, auf die der Aktualisierungsprozessor 4 momentan zugreifen will, wird stets ein Lesezugriff ausgeführt, ein evtl. auszuführender Schreibvorgang also unterdrückt. Dadurch ist gewährleistet, daß die parallele Abarbeitung von Aktualisierungsverfahren durch den Aktualisierungsprozessor 3 und Anwenderprogramm durch den Anwendungsprozessor 4 nicht zu falschen bzw. sinnlosen Inhalten der Timerzellen führen kann.

Die einfachste Form der Unterdrückung eines Schreibvorgangs ist in FIG 3 dargestellt. Gemäß FIG 3 ist der Ausgang des Adreßvergleichers 11 mit einem Eingang eines UND-Gatters 14 verbunden. Mit dem zweiten Eingang des UND-Gatters 14 ist eine Leitung verbunden, über die ein Schreibwunsch WR' zugeführt wird. Der Ausgang des UND-Gatters 14 läßt damit nur dann ein Schreiben WR eines Wertes in eine Timerzelle zu, wenn beide Bedingungen erfüllt sind, nämlich daß zum einen ein prinzipieller Schreibwunsch WR' vorliegt und daß zum anderen seit dem letzten Lesen kein Zugriff des Anwendungsprozessors 3 auf diese Timerzelle stattgefunden hat. Das UND-Gatter 14 wirkt folglich als Signalwandler, da die Schreibanforderung WR' in ein Lesesignal RD umgewandelt wird, wenn der Anwendungsprozessor 3 in der Bearbeitungszeit des Aktualisierungsprozessors 4 auf die momentan zu aktualisierende Timerzelle zugegriffen hat.

Da lesende Zugriffe des Anwendungsprozessors 3 einer Aktualisierung der betreffenden Timerzelle nicht entgegenstehen, wird im Adreßvergleicher 11 vorteilhafterweise auch überwacht, ob der Anwendungsprozessor 3 einen lesenden oder einen schreibenden Zugriff ausführt. Nur bei schreibenden Zugriffen des Anwendungsprozessors 3 muß das Schreiben des geänderten Timerwertes in die Timerzelle unterdrückt werden und statt dessen der Lesevorgang wiederholt werden.

Der in FIG 1 dargestellte Zusatzprozessor 2 greift, wie oben ausgeführt, nur bei Wort- und Systembefehlen auf die Speicher 5 bzw. 6 zu. Der Zugriff dieses Prozessors 2 erfolgt dabei asynchron zu dem Takt, mit dem der Anwendungsprozessor 3 und der Aktualisierungsprozessor 4 getaktet werden. Damit die Aktualisierung der Timerzellen nicht durch einen Zugriff des Zusatzprozessors 2 gestört wird, übermittelt der Zusatzprozessor 2 vor seinem Zugriff eine Nichtanlaufanforderung über die Steuerleitung 12 an den Aktualisierungsprozessor 4. Sodann wartet der Zusatzprozessor 2 mit seinem Zugriff, bis der Aktualisierungsprozessor 4 alle Zeitzellen aktualisiert hat, und greift erst dann auf den Bus 1 zu. Nach dem Buszugriff des Mikroprozessors 2 wird der Anwendungsprozessor 3 wieder angestoßen und der Aktualisierungsprozessor 4 freigegeben. Den Aktualisierungsprozessor 4 freigeben heißt in diesem Fall, daß der Aktualisierungsprozessor 4 zwar inaktiv bleibt, da er seinen Aktualisierungszyklus bereits abgeschlossen hat, jedoch im Prinzip jederzeit wieder aktivierbar ist.

Um Zugriffskonflikte zwischen dem Zusatzprozessor 2 und dem Aktualisierungsprozessor 4 mit Sicherheit zu vermeiden, sind zwei Wege möglich.

Die einfache Möglichkeit ist, daß der Zusatzprozessor 2 mit seinem Zugriff so lange wartet, bis der Aktualisierungsprozessor im ungünstigsten Fall alle Timerzellen aktualisiert hat.

Bei einem Takt CLK von beispielsweise 20 MHz dauert das Aktualisieren einer Timerzelle 100 ns, das Aktualisieren aller 256 Timerzellen also knapp 26 µs. In diesem Falle wäre die Wartezeit mit 26 µs hinreichend bemessen.

Alternativ ist auch möglich, daß der Aktualisierungsprozessor 4 dem Zusatzprozessor 2 über die Steuerleitung 13 die Beendigung seines momentanen Aktualisierungslaufs mitteilt und der Zusatzprozessor 2 unmittelbar nach dieser Meldung auf den Bus 1 und damit auch beispielsweise auf die Speicher 5, 6 zugreift.

## Patentansprüche

1. Aktualisierungsverfahren für Timerzellen eines Automatisierungsgerätes, das parallel zum Aktualisierungsverfahren ein Anwenderprogramm ausführt,
- wobei die Timerzellen in einem Speicher (5) abgelegt sind, auf den sowohl ein das Aktualisierungsverfahren ausführender Aktualisierungsprozessor (4) als auch ein das Anwenderprogramm ausführender Anwendungsprozessor (3), vorzugsweise ein Bitprozessor (3), zugreifen können,
- wobei der Aktualisierungsprozessor (4) und der Anwendungsprozessor (3) abwechselnd Speicherzugriffe ausführen können,
- wobei der Aktualisierungsprozessor (4) nur während der Speicherzugriffspausen des Anwendungsprozessors (3) Speicherzugriffe ausführt und umgekehrt der Anwendungsprozessor (3) nur während der Speicherzugriffspausen des Aktualisierungsprozessors (4) Speicherzugriffe ausführt,
- wobei beim Aktualisieren einer der Timerzellen vom Aktualisierungsprozessor (4) aus der Timerzelle der Wert ausgelesen, der Wert geändert und der geänderte Wert wieder in die Timerzelle zurückgeschrieben wird,
- wobei überwacht wird, ob der Anwendungsprozessor (3) in einer Bearbeitungszeit zwischen Lesen und Schreiben des Wertes der Timerzelle durch den Aktualisierungsprozessor (4) auf die Timerzelle zugreift, und
- wobei das Schreiben des geänderten Wertes unterdrückt und der Lesevorgang wiederholt wird, vorzugsweise der Lesevorgang anstelle des Schreibvorganges ausgeführt wird, wenn der Anwendungsprozessor (3) in der Bearbeitungszeit auf die Timerzelle zugreift.

2. Aktualisierungsverfahren nach Anspruch 1, **dadurch gekennzeichnet,** daß der Lesevorgang nur bei einem schreibenden Zugriff des Anwendungsprozessors (3) wiederholt wird.

3. Aktualisierungsverfahren nach Anspruch 1 oder 2, **dadurch gekennzeichnet,** daß die Prozessoren (3,4) über voneinander getrennte Busse (1,8) auf den Speicher (5) zugreifen.

4. Aktualisierungsverfahren nach einem der Ansprüche 1 bis 3, **dadurch gekennzeichnet,**
- daß ein Zusatzprozessor (2), typisch ein Standard-Mikroprozessor (2), asynchron zum Anwendungs- (3) und zum Aktualisierungsprozessor (4) Speicherzugriffe ausführt,
- daß vor dem Zugriff des Zusatzprozessors (2) eine Nichtanlaufanforderung an den Aktualisierungsprozessor (4) übermittelt wird und
- daß der Zugriff des Zusatzprozessors (2) erst nach dem Aktualisieren aller Timerzellen erfolgt.

5. Aktualisierungsverfahren nach Anspruch 4, **dadurch gekennzeichnet,** daß der Zugriff des Zusatzprozessors (2) erst nach einer Wartezeit nach dem Übermitteln der Nichtanlaufanforderung erfolgt, wobei die Wartezeit derart bemessen ist, daß der Aktualisierungsprozessor (4) alle Timerzellen vor Ablauf der Wartezeit mit Sicherheit aktualisiert hat.

6. Aktualisierungsverfahren nach Anspruch 4, **dadurch gekennzeichnet,** daß der Aktualisierungsprozessor (4) dem Zusatzprozessor (2) das Aktualisieren aller Timerzellen meldet und der Zusatzprozessor (2) unmittelbar nach dieser Meldung Speicherzugriffe ausführt.

7. Automatisierungsgerät zur Durchführung des Aktualisierungsverfahrens nach einem der obigen Ansprüche, mit einem Timerzellenspeicher (5), der sowohl mit einem das Anwenderprogramm ausführenden Anwendungsprozessor (3) als auch mit einem das Aktualisierungsverfahren ausführenden Aktualisierungsprozessor (4) verbunden ist,
**dadurch gekennzeichnet,** daß das Automatisierungsgerät
- einen Adreßvergleicher (11) zum Vergleichen der während einer Bearbeitungszeit zwischen Lesen und Schreiben einer Timerzelle durch den Aktualisierungsprozessor (4) erfolgenden Zugriffe des Anwendungsprozessors (3) auf den Timerzellenspeicher (5) mit der momentan vom Aktualisierungsprozessor (4) zu aktualisierenden Timerzelle sowie
- einen Signalwandler (14) zum Unterdrücken des Überschreibens des in der momentan zu aktualisierenden Timerzelle gespeicherten Wertes und zum Wiederholen des Lesens des in der momentan zu aktualisierenden Timerzelle gespeicherten Wertes bei einem Zugriff des Anwendungsprozessors (3) auf die momentan vom Aktualisierungsprozessor (4) zu aktualisierende Timerzelle während der Bearbeitungszeit aufweist.

8. Automatisierungsgerät nach Anspruch 7, **dadurch gekennzeichnet,** daß der Timerzellenspeicher (5) mit den Prozessoren (3,4) über voneinander getrennte Busse (1,8) verbunden ist.

9. Automatisierungsgerät nach Anspruch 7 oder 8, **dadurch gekennzeichnet,** daß der Timerzellenspeicher (5) ein schneller Speicher (5) ist.

10. Automatisierungsgerat nach Anspruch 7, 8 oder 9, **dadurch gekennzeichnet,** daß das Lesen nur bei einem schreibenden Zugriff des Anwendungsprozessors (3) wiederholt wird.

11. Automatisierungsgerät nach einem der Ansprüche 7 bis 10, **dadurch gekennzeichnet,**
- daß es einen Zusatzprozessor (2), typisch einen Standard-Mikroprozessor (2), aufweist,
- daß durch den Zusatzprozessor (2) asynchron zum Anwendungs-(3) und zum Aktualisierungsprozessor (4) Speicherzugriffe ausführbar sind,
- daß vor dem Zugriff des Zusatzprozessors (2) eine Nichtanlaufanforderung an den Aktualisierungsprozessor (4) übermittelbar ist und
- daß der Zugriff des Zusatzprozessors (2) erst nach dem Aktualisieren aller Timerzellen erfolgt.

## Claims

1. Updating method for timer cells of an automation device which executes a user program in parallel with the updating method,
- wherein the timer cells are stored in a memory (5) which can be accessed by both an updating processor (4) executing the updating method and an application processor (3), preferably a bit processor (3), executing the user program,
- wherein the updating processor (4) and the application processor (3) can execute memory accesses alternately,
- wherein the updating processor (4) executes memory accesses only during the memory access pauses of the application processor (3) and conversely the application processor (3) executes memory accesses only during the memory access pauses of the updating processor (4),
- wherein, during the updating of one of the timer cells by the updating processor (4), the value is read out from the timer cell, the value is altered and the altered value is written back into the timer cell again,
- wherein monitoring takes place to determine whether the application processor (3) accesses the timer cell during a processing time between the reading and the writing of the value of the timer cell by the updating processor (4), and
- wherein the writing of the altered value is suppressed and the read function is repeated, the read function preferably being executed instead of the write function, when the application processor (3) accesses the timer cell during the processing time.

2. Updating method according to claim 1, **characterised in that** the read function is repeated only in the case of a write access by the application processor (3).

3. Updating method according to claim 1 or 2, **characterised in that** the processors (3, 4) access the memory (5) by way of buses (1, 8) separated from each other.

4. Updating method according to one of claims 1 to 3, **characterised in that**
- an additional processor (2), typically a standard microprocessor (2), executes memory accesses asynchronously with the application processor (3) and the updating processor (4),
- before the access of the additional processor (2), a failure-to-start request is communicated to the updating processor (4), and
- the access of the additional processor (2) does not take place until after the updating of all of the timer cells.

5. Updating method according to claim 4, **characterised in that** the access of the additional processor (2) does not take place until after a delay after communication of the failure-to-start request, wherein the duration of the delay is sufficient for the updating processor (4) to update all of the timer cells with certainty before the expiry of the delay.

6. Updating method according to claim 4, **characterised in that** the updating processor (4) reports the updating of all of the timer cells to the additional processor (2) and the additional processor (2) executes memory accesses directly after this message.

7. Automation device for implementing the updating method according to one of the preceding claims, having a timer cell memory (5) which is connected both to an application processor (3) executing the user program and to an updating processor (4) executing the updating method, **characterised in** **that** the automation device has:
- an address comparator (11) for the comparison of the accesses of the application processor (3) to the timer cell memory (5), which accesses take place during a processing time between the reading and the writing of a timer cell by the updating processor (4), with the timer cell currently to be updated by the updating processor (4), as well as
- a signal converter (14) for suppression of the overwriting of the value stored in the timer cell currently to be updated and for repetition of the reading of the value stored in the timer cell currently to be updated, in the case of an access of the application processor (3) to the timer cell currently to be updated by the updating processor (4), during the processing time.

8. Automation device according to claim 7, **characterised in that** the timer cell memory (5) is connected to the processors (3, 4) by way of buses (1, 8j separated from each other.

9. Automation device according to claim 7 or 8, **characterised in that** the timer cell memory (5) is a rapid memory (5).

10. Automation device according to claim 7, 8 or 9, **characterised in that** reading is repeated only in the case of a write access of the application processor (3).

11. Automation device according to one of claims 7 to 10, **characterised in that**
- it has an additional processor (2), typically a standard microprocessor (2),
- memory accesses can be executed by the additional processor (2) asynchronously with the application processor (3) and the updating processor (4),
- before the access of the additional processor (2), a failure-to-start request can be communicated to the updating processor (4), and
- the access of the additional processor (2) does not take place until after the updating of all of the timer cells.

## Revendications

1. Procédé de mise à jour de cellules d'horloge d'un appareil d'automatisation qui exécute un programme d'application parallèlement au procédé de mise à jour,
- les cellules d'horloge étant mises en mémoire dans une mémoire (5) à laquelle peuvent accéder aussi bien un processeur (4) de mise à jour exécutant le procédé de mise à jour qu'un processeur (3) d'application, de préférence un processeur (3) à 1 bit, exécutant le programme d'application,
- le processeur (4) de mise à jour et le processeur (3) d'application pouvant effectuer des accès à la mémoire à tour de rôle,
- le processeur (4) de mise à jour n'effectuant des accès à la mémoire que pendant des arrêts d'accès à la mémoire du processeur (3) d'application et, inversement, le processeur (3) d'application n'effectuant des accès à la mémoire que pendant des arrêts d'accès à la mémoire du processeur (4) de mise à jour.
- le processeur (4) de mise à jour lisant lors de la mise à jour de l'une des cellules d'horloge, la valeur dans la cellule d'horloge, modifiant la valeur et réécrivant la valeur modifiée à nouveau dans la cellule d'horloge,
- il est surveillé si le processeur (3) d'application accède à la cellule d'horloge pendant le temps de traitement qui s'écoule entre la lecture et l'écriture de la valeur de la cellule d'horloge par le processeur (4) de mise à jour, et
- l'écriture de la valeur modifiée étant supprimée et l'opération de lecture répétée, de préférence l'opération de lecture étant effectuée au lieu de l'opération d'écriture, si le processeur (3) d'application accède à la cellule d'horloge pendant le temps de traitement.

2. Procédé de mise à jour suivant la revendication 1, caractérisé en ce que l'opération de lecture n'est répétée que lors d'un accès d'écriture du processeur (3) d'application.

3. Procédé de mise à jour suivant la revendication 1 ou 2, caractérisé en ce que les processeurs (3, 4) accèdent à la mémoire (5) par l'intermédiaire de bus (1, 8) distincts l'un de l'autre.

4. Procédé de mise à jour suivant l'une des revendication 1 à 3, caractérisé en ce que,
- un processeur (2) supplémentaire, typiquement un microprocesseur standard, effectue des accès à la mémoire de manière asynchrone par rapport au processeur (3) d'application et au processeur (4) de mise à jour,
- avant l'accès du processeur (2) supplémentaire, une demande de ne pas démarrer est transmise au processeur (4) de mise à jour et
- l'accès du processeur (2) supplémentaire ne s'effectue qu'après la mise à jour de toutes les cellules d'horloge.

5. Procédé de mise à jour suivant la revendication 4, caractérisé en ce que l'accès du processeur (2) supplémentaire ne s'effectue qu'après un temps d'attente succédant à la transmission de la demande de ne pas démarrer, le temps d'attente étant choisi de manière que le processeur (4) de mise à jour ait mis à jour de manière sûre toutes les cellules d'horloge avant l'écoulement du temps d'attente.

6. Procédé de mise à jour suivant la revendication 4, caractérisé en ce que le processeur (4) de mise à jour annonce au processeur (2) supplémentaire la mise à jour de toutes les cellules d'horloge et en ce que le processeur (2) supplémentaire effectue des accès à la mémoire immédiatement après cette annonce.

7. Appareil d'automatisation pour la mise en oeuvre du procédé de mise à jour suivant l'une des revendications précédentes, comportant une mémoire (5) de cellules d'horloge qui est reliée aussi bien à un processeur (3) d'application exécutant le programme d'application qu'à un processeur (4) de mise à jour exécutant le procédé de mise à jour, caractérisé en ce que l'appareil d'automatisation comporte
- un comparateur (11) d'adresses servant à comparer à la cellule d'horloge à actualiser sur le moment par le processeur (4) de mise à jour les accès du processeur (3) d'application à la mémoire (5) de cellules d'horloge s'effectuant pendant un temps de traitement s'écoulant entre la lecture et l'écriture d'une cellule d'horloge par le processeur (4) de mise à jour, ainsi que
- un convertisseur (14) de signal servant à supprimer la réécriture de la valeur mémorisée dans la cellule d'horloge à mettre à jour sur le moment et servant à répéter la lecture de la valeur mémorisée dans la cellule d'horloge à mettre à jour sur le moment, lors d'un accès du processeur (3) d'application à la cellule d'horloge à mettre à jour sur le moment par le processeur (4) de mise à jour, pendant le temps de traitement.

8. Appareil d'automatisation suivant la revendication 7, caractérisé en ce que la mémoire (5) de cellules d'horloge est reliée aux processeurs (3, 4) par l'intermédiaire de bus (1, 8) distincts l'un de l'autre.

9. Appareil d'automatisation suivant la revendication 7 ou 8, caractérisé en ce que la mémoire (5) de cellules d'horloge est une mémoire (5) rapide.

10. Appareil d'automatisation suivant la revendication 7, 8 ou 9, caractérisé en ce que la lecture n'est répétée qu'en cas d'un accès d'écriture du processeur (3) d'application.

11. Appareil d'automatisation suivant l'une des revendications 7 à 10, caractérisé en ce que
- il comporte un processeur (2) supplémentaire, typiquement un microprocesseur (2) standard,
- des accès à la mémoire peuvent être effectués par le processeur (2) supplémentaire de manière asynchrone par rapport au processeur (3) d'application et au processeur (4) de mise à jour,
- avant l'accès du processeur (2) supplémentaire, une demande de ne pas démarrer peut être transmise au processeur (4) de mise à jour et
- l'accès du processeur (2) supplémentaire ne s'effectue qu'après la mise à jour de toutes les cellules d'horloge.
